# EUROPEAN PATENT SPECIFICATION

(11) **EP 2 435 601 B1**
(45) Date of publication and mention of the grant of the patent: **02.05.2018**
(21) Application number: 10722481.8
(22) Date of filing: 27.05.2010
(51) Int. Cl.: C23C 22/34, C09D 5/08, C25D 3/06

(54) **PROCESS AND COMPOSITION FOR TREATING METAL SURFACES**
VERFAHREN UND ZUSAMMENSETZUNG ZUR BEHANDLUNG VON METALLOBERFLÄCHEN
PROCÉDÉ ET COMPOSITION DE TRAITEMENT DE SURFACES DES MÉTAUX

(30) Priority: 29.05.2009 US 474960
(43) Date of publication of application: 04.04.2012
(73) Proprietor: BULK CHEMICALS, INC., Reading, PA 19605 (US)
(72) Inventor: RIVERA, Jose, B., Auburn PA 17922 (US); CHURCH, Richard, J., Myerstown PA 17067 (US)
(74) Representative: Barker Brettell LLP
(86) International application number: PCT/US2010/036392
(87) International publication number: WO 2010/138708

(56) References cited:
- EP-A2- 2 014 793
- WO-A1-2009/137358
- US-A- 5 294 266
- US-A1- 2006 240 191
- COOLBAUGH M T ET AL: "Readiness of Trivalent Chromium Conversion Coatings for Aluminum Alloys", CORROSION 2000, MARCH 26 - 31, 2000, ORLANDO, FL [US], 00276, 26 March 2000 (2000-03-26), pages 1-11, XP9136807, NACE International, Conferences Division, Houston, TX [US]
- PANIAGUA A R ET AL: "Determination of Chromium(VI) and Chromium(III) by using a Diphenylcarbazide-Modified Carbon Paste Electrode", ELECTROANALYSIS, vol. 5, no. 2, 9 April 2005 (2005-04-09), pages 155-163, XP002612659, VCH Publishers, Inc. [US] DOI: 10.1002/elan.1140050211

## Description

### BACKGROUND OF THE INVENTION

Hexavalent chromium compounds have been used as traditional conversion coatings to treat metal surfaces to improve their corrosion resistance and paint adhesion. Unfortunately, hexavalent chromium shows toxicological effects and has been determined by the Environmental Protection Agency as a risk to the environment and by the Occupational Safety and Health Agency as a health risk. Moreover, chemistries based on hexavalent chromium are classified as carcinogens by these agencies. Thus, it would be of significant value to provide coatings and processes that are free of hexavalent chromium, but still capable of improving paint adhesion and corrosion resistance of metal surfaces.

WO 2009/137358 A1 discloses a composition for treating a metal surface to improve paint adhesion, corrosion resistance and/or maintain low electrical contact resistance, the composition comprising water, a trivalent chromium compound, an organo-functional silane, and a compound of a group IV-B element. US 5294266 A describes a composition and process for the chromium free passivating postrinsing of conversion layers on metals before the application of a paint or adhesive. EP 2014793 A2 discloses a method of producing a corrosion protective coating layer involving contacting the surface to be treated with an aqueous solution (I) containing (a) trivalent chromium ions and (b) phosphate compound(s), at a weight ratio of (a) to (b) (calculated as orthophosphate) of 1:1.5-3.

### SUMMARY OF THE INVENTION

In one aspect, the invention provides a method of preparing an aqueous solution of Cr₂(GF₆)₃, in which G is a Group IV-B element, comprising adding hydrogen peroxide to a mixture comprising water and a chromium VI compound in the presence of at least one acid according to the formula H₂GF₆, in which G is a Group IV-B element, wherein the aqueous composition contains less than 500 ppm of alkali metal ions and less than 200 ppm of halide ions, relative to chromium, and one or more contaminating ions, wherein the total amount of said one or more contaminating ions is present at less than 1000 ppm relative to chromium, wherein said one or more contaminating ions are ions that are not ions of a salt with the canonical formula of Cr₂(GF₆)₃ and wherein the aqueous composition tests negative for chromium VI using s-diphenylcarbazide. In another aspect, the invention provides an aqueous composition comprising dissolved Cr₂(GF₆)₃, in which G is a Group IV-B element, and containing less than 500 ppm of alkali metal ions and less than 200 ppm of halide ions, relative to chromium and which tests negative for chromium VI using s-diphenylcarbazide, wherein the composition contains one or more contaminating ions, and wherein the total amount of said one or more contaminating ions is present at less than 1000 ppm relative to chromium, wherein said one or more contaminating ions are ions that are not ions of a salt with the canonical formula of Cr₂(GF6)₃. In yet another aspect, the invention provides a method of treating a metal surface, comprising contacting the metal surface with an aqueous composition comprising dissolved Cr₂(GF₆)₃, in which G is a Group IV-B element, and containing less than 500 ppm in total of alkali metal ions and less than 200 ppm of halide ions, relative to chromium,_and which tests negative for chromium VI using s-diphenylcarbazide, wherein the aqueous composition contains one or more contaminating ions, and wherein the total amount of said one or more contaminating ions is present at less than 1000 ppm relative to chromium, and wherein said one or more contaminating ions are ions that are not ions of a salt with the canonical formula of Cr₂(GF₆)₃

### DETAILED DESCRIPTION OF THE INVENTION

It has now been found that aqueous coating compositions comprising one or more of certain chromium III salts provide excellent corrosion resistance and paint adhesion on metal surfaces, when used either alone or in combination with one or more polymers having a plurality of carboxylic acid groups and one or more polymers having a plurality of hydroxyl groups. Alternatively, a polymer containing a plurality of both carboxylic and hydroxyl groups may be used with the chromium III salts. It has further been found that such compositions can be prepared in a manner that provides very low levels of contaminating ions, thus making it easier to use these compositions without buildup of such ions and resulting diminishment of corrosion resistance.

### Chromium III Salts

The chromium III salts used in the compositions of the invention are produced by a novel reaction process, and are believed to be salts of Group IV-B fluoacids according to the general formula Cr₂(GF₆)₃ in which G represents a Group IV-B metal (Zr, Ti or Hf). These salts are essentially free of contaminating ions, i.e., essentially free of ions that are not part of the canonical formula of the salt, and they will be referred to herein as "high-purity" chromium salts with the understanding that trace amounts of contaminating ions may be present, typically as a result of impurities in the ingredients.

It is possible to make a variety of high-purity chromium III salts using the methods disclosed herein, including but not limited to the salts of Group IV-B fluoacids noted above. For simplicity, the inventors will describe the invention with respect to chromium III fluozirconate and compositions that include it, but it will be understood that analogous procedures may be used to make and use other high-purity chromium III salts as well.

High-purity chromium fluozirconate according to the invention can be made by a process that includes reducing aqueous chromic acid and/or partially reduced aqueous chromic acid with hydrogen peroxide, which is itself oxidized in the process to form gaseous O₂. If chromic acid is used, the reaction is believed to proceed according to the equation shown below, although the inventors do not intend to be bound by this proposed explanation. The skilled artisan will recognize that CrO₃ is the anhydrous form of chromic acid and is used in the following equation for simplicity.

2CrO₃ + 3H₂O₂ + 3H₂ZrF₆ → Cr₂(ZrF₆)₃ + 6H₂O + 3O₂ ↑

During the reaction and afterwards, the mixture remains essentially fully liquid and essentially free (i.e., only trace amounts, if any) of precipitates or suspended undissolved solids. The fluozirconic acid may be added simultaneously with the hydrogen peroxide, or may be admixed with the chromic acid prior to adding the hydrogen peroxide, or a combination of these.

If partially reduced chromic acid is used as the starting material, in some embodiments it is prepared by reaction of chromic acid with an organic compound (for example, formaldehyde or methanol) which is oxidized by the chromic acid and results in partial reduction of the chromium.

In practice, more than a stoichiometric amount of hydrogen peroxide may in some cases be needed to achieve full reduction of the chromium VI in chromic acid to chromium III. This may be the result of decomposition and/or volatilization of some amount of hydrogen peroxide during the reaction. Essentially no chromium VI remains after the hydrogen peroxide reaction is complete, as indicated by a negative test using the s-diphenylcarbazide method (ASTM D 1687-02, Chromium in Water, Test Method A), which produces a red-violet color in the presence of chromium VI.

Mixtures of high-purity chromium III salts can also be made by the above procedure, using mixed acids instead of a single acid such as fluozirconic. Formation of chromium III salts by the methods of this invention is believed to be general for a variety of salts, barring any specific detrimental interaction of the anion.

Using the preparative methods described herein, no mixing of separate trivalent chromium compounds (for example, CrF₃) with fluozirconic acid is required to form the chromium III fluozirconate, and so no extraneous anions or cations are present in greater than trace amounts. As a result, the purity of the chromium III salt is determined mainly by the purity of the raw materials used to prepare it. The salt, presumably Cr₂(ZrF₆)₃, functions well in metal pretreatment compositions to improve the corrosion resistance of the substrate.

The methods of this invention make it possible to prepare chromium III salts with very low levels of contaminating cations and anions. In some embodiments, the amount of any given contaminating cation (typically a metal, especially an alkali metal) is less than 500 ppm, or less than 300 ppm, or less than 200 ppm, relative to chromium. These limits may also apply specifically to the total of all alkali metal ions, or even to all metal ions in total.

Similarly, the content of contaminating anions may be very low, and in some embodiments the amount of any given contaminating ion is less than 1000 ppm, or less than 500 ppm, or less than 300 ppm, or less than 200 ppm, relative to chromium. In particular, these limits may apply individually to each of fluoride, chloride, bromide, iodide, nitrate and sulfate. These limits may also apply to the total of all of these anions, or even to all anions in total (including other anions not listed here).

An alternative method of making the chromium III fluozirconate according to the invention may be to first produce hydrous chromium oxide, sometimes referred to as hydrated chromium oxide or hydrated chrome oxide. This material, approximately of the formula Cr₂O₃●nH₂O or perhaps Cr(OH)₃, can be made by reaction of Cr₂(SO₄)₃ (chrome alum) with a base such as NaOH. This approach requires washing out or otherwise removing the Na₂SO₄ byproduct from the resulting hydrous chromium oxide so as to produce a product essentially free of contaminating cations and anions. Once such washing is complete, the hydrous chromium oxide is contacted with fluozirconic acid to form aqueous high-purity chromium III fluozirconate.

In all of the above methods, the molar ratio of zirconium to chromium in the final product will typically be about 1.5:1, as indicated by the stoichiometry implicit in the formula Cr₂(ZrF₆)₃. This calculates to a weight ratio of 2.63:1. The composition need not contain only Cr₂(ZrF₆)₃, however. Thus, the weight ratio can vary somewhat from the stoichiometric value. The ratio will typically be at least 2.4:1, more typically at least 2.5:1, and most typically at least 2.6:1. The weight ratio will typically be at most 3.0:1, more typically at most 2.9:1, and most typically at most 2.8:1. These ratios may be converted to their equivalent mole ratios, and the corresponding weight ratios may then be calculated for Cr₂(TiF₆)₃ and Cr₂(HfF₆)₃.

The purity of the chromium III fluozirconate provided by the invention may be very high, even of reagent grade. High-purity chromium III fluozirconate is suitable for use in any application for which the use of chromium III fluozirconate is known, for example in electroplating baths.

Chromium fluozirconate prepared as described herein provides excellent corrosion protection on metal surfaces, including at least Al, Zn and alloys of either of these, and may also be useful for providing a passivation layer for electroplating.

In some embodiments, chromium fluozirconate is used in combination with polymers having a plurality of carboxylic acid groups and polymers having a plurality of hydroxyl groups. Or, a single polymer containing both may be used with the chromium fluozirconate instead of, or in addition to, the two separate polymers.

Polymers having a plurality of carboxylic acid groups include, as nonlimiting examples, polyacrylic acid and copolymers of methyl vinyl ether and maleic acid. Polymers having a plurality of hydroxyl groups include, as nonlimiting examples, polyvinyl alcohols and homopolymers or copolymers of hydroxyethyl methacrylate. Exemplary polymers having both carboxylic and hydroxyl functionality in the same molecule include free-radical copolymers of hydroxyethyl methacrylate and methacrylic acid.

### Metal Treatment Formulations Comprising Hihg-Purity Chromium III Fluozirconate

High-purity chromium III fluozirconate may be used to treat metal surfaces to improve corrosion resistance. In practical use, the absence of extraneous cations and anions provides a significant advantage. This is because chromium III fluozirconate solutions made by an alternative process such as mixing CrF₃ with fluozirconic acid, for example, contain extraneous fluoride ions that continue to build up in concentration as the metal treatment bath is replenished with additional chromium III fluozirconate solution, as it is consumed by the metal being treated. Such buildup can cause the treatment coating to become weak and can also cause sludge to form in the bath. These problems may be practically eliminated by using the high-purity chromium III fluozirconate solutions of this invention. Further, the high purity makes it possible to merely dry the solution in place on the treated metal surface without rinsing, if so desired, thereby saving a step and reducing waste handling.

Any metal may be treated, with particularly good results being obtained on zinc, zinc alloy, aluminum, and aluminum alloy surfaces. As used herein, the term "zinc alloy" means an alloy in which zinc is present at a weight percent greater than that of every other metal in the alloy. The term "alloy" is similarly defined for every other metal to which the term is applied. Metal alloys typically contain at least 50 wt% of the named metal.

High-purity chromium III fluozirconate may be applied alone from aqueous solution to a metal surface and subsequently dried to remove water, resulting in effective passivation of the surface. Alternatively, it may be mixed with an organo-functional silane such as aminopropyl triethoxysilane to make a metal treatment formulation. The addition of organo-functional silanes may improve adhesion of subsequently applied coatings (such as paints) to the treated surfaces, while maintaining good corrosion resistance in a Neutral Salt Spray test.

As used herein, the term "organo-functional silane" means a compound having: (1) a silane radical (e.g., silyl (-SiH₃), disilanyl (-Si₂H₅), etc.); (2) an organic group (such as an alkyl, an aryl or an alkoxy group); and (3) a functional group. Typical organo-functional silanes have two different reactive groups on the silicon atom, and may for example be according to the formula X-RSi(OR')₃₋ₙRₙ", where n = 0,1, 2. The R' and R" groups are typically alkyl, for example methyl, ethyl or a C3-C4 alkyl, and in some cases R' is acetyl. R is typically an alkanediyl group, for example a CH₂ or a linear C2-C3 moiety. The X groups may include, but are not limited to, amino, epoxy, vinyl, mercapto, methacryloxy and glycidoxy groups. Without being bound by any theory, it is believed that the organo-functional silane serves to bond with, or assist in bonding among, either the other constituents in the pretreatment composition or the constituents of other compositions or the metal surface itself or some combination thereof. Exemplary suitable organo-functional silanes include aminopropyltriethoxy silane, mercapto silanes, and epoxy silanes. Aminopropyltriethoxy silane is sold under various trade names, including AMEO and SILWET® A-1100, and a suitable epoxy functional silane is sold under the trade name of HYDROSIL™ 2759.

Additional components that are well known in the art may also be included in compositions of the present invention. For example, wetting agents, such as fluorosurfactants, may be included. Thickeners may also be included if a higher viscosity is needed for a given application. Exemplary thickeners include CARBOPOL® EZ-2, available from Lubrizol, and METHOCEL® F4M, available from Dow. Finally, if necessary, a compatible biocide, such as a 1,2-benzisothiazolin-3-one biocide sold under the trademark NIPACIDS BIT 20 by Clarion of Charlotte, North Carolina or a product sold under the trademark NUOSEPT 495 by ISP Chemicals of Calvert City, Kentucky, can be included to inhibit biological growth in a working bath. Any of these components, as well as organo-functional silanes, may also be included in compositions containing polymers as described below.

The pH of metal treatment formulations not including such polymers will typically be at least 2.5, more typically at least 3.0, and most typically at least 3.5. The pH will typically be at most 5.5, more typically at most 5.0, and most typically at most 4.5. The concentration of chromium (measured as the metal) will typically be in a range from 0.0029% to 0.029% wt%, more typically in a range from 0.007% to 0.010% wt%.

As noted above, high-purity chromium III fluozirconate may also be included in a composition further comprising a polymer having a plurality of carboxylic acid groups and a polymer having a plurality of hydroxyl groups. Typically, such a composition will be aqueous and absent any significant amounts of other solvents. For a working bath, the following properties are typical. The pH will typically be in a range from 2.5 to 4.0, more typically in a range from 2.8 to 3.2. The level of chromium III fluozirconate (and/or other chromium III fluoacid salts in total) will typically be in a range from 0.02% to 0.20%, more typically in a range from 0.05% to 0.07%. The one or more polymers having a plurality of carboxylic acid groups will in total typically be present in a range from 0.00375% to 0.0375%, more typically in a range from 0.010% to 0.020%. The one or more polymers having a plurality of hydroxyl groups will in total typically be present in a range from 0.0016% to 0.020% more typically in a range from 0.0064% to 0.008%. Organo-functional silanes, if present, will in total typically be present in a range from 0.04% to 0.40%, more typically in a range from 0.18% to 0.22%.

Compositions may also include concentrates that, upon appropriate dilution, afford formulations as described immediately above. The level of concentration will typically be such that they require dilution in a range of 50:1 to 100:1 by volume to reach working bath concentration.

In some embodiments, the compositions of this invention are essentially free (i.e., only trace amounts, if any) of precipitates or suspended undissolved solids. In some embodiments of the invention, the compositions are free of polymers other than those defined above having a plurality of carboxylic acid and/or hydroxyl groups. In some embodiments, the compositions are free of polymers having phosphonic acid groups and/or polymers having sulfonic acid groups. In some embodiments, no metal compounds are included in the compositions of this invention other than as specified above.

### EXAMPLES

### GLOSSARY

8X202Q powder paint system from Akzo Nobel
AAMA 2603 American Architectural Manufacturers Association specification
AAMA 2605 American Architectural Manufacturers Association specification
BULK KLEEN® 737G non-etching silicated alkaline cleaner from Bulk Chemicals, Incorporated, Reading, PA
BULK KLEEN® 749 KOH based, non-smutting cleaner from Bulk Chemicals, Incorporated
BULK KLEEN® 678 Hydrofluoric acid based oxide remover from Bulk Chemicals, Incorporated
BULK BOND® 1047 19% Hydrofluoric acid from Bulk Chemicals, Incorporated
BULK BOND® 1407 Hexavalent chromium phosphate conversion coating composition from Bulk Chemicals, Incorporated
BULK RINSE® 6A partially reduced chromic acid from Bulk Chemicals, Incorporated
CELVOL® 08-125 polyvinyl alcohol (8 wt% solution) from Celanese Corporation DIW deionized water
E-CLPS® 1900 chrome-free pretreatment from Bulks Chemicals, Incorporated
E-CLPS® 2101 chrome-free pretreatment from Bulk Chemicals, Incorporated
GANTREZ® S97-BF Methyl vinyl ether/maleic acid copolymer, 12-13% aqueous solution, from International Specialty Products, Wayne, NJ
Qualicoat specifications: Specifications for a Quality Label for Paint, Lacquer and Powder Coatings on Aluminum for Architectural Applications, 9th edition, effective January, 2000, Qualicoat, Zurich, Switzerland
SILWET® A1100 aminopropyl triethoxysilane from Crompton Corporation, Greenwich, CT
TRINAR® fluoropolymer coating from Akzo Nobel
Valspar A201 Alenco Poly 3500 liquid paint from Valspar Corporation, Minneapolis, MN

### Preparation of High-Purity Chromium III Fluozirconate

### Example 1

Aqueous chromic acid was placed into a beaker and fluozirconic acid was added. Hydrogen peroxide was then added with stirring until complete reduction of chromium was indicated by a very sharp color change from yellow-green to blue-green. A test for hexavalent chromium using s-diphenylcarbazide (a reagent specific to hexavalent chromium capable of detection of hexavalent chromium at levels at sub-micrograms per liter levels) was negative, confirming complete conversion to trivalent chromium.

Specific quantities are as below:
chromic acid (nominal 40%, aqueous) - 36.2 g
fluozirconic acid (nominal 45%, aqueous) - 100.0 g
hydrogen peroxide (nominal 35%, aqueous) - 24.6 g + 5.0 g extra

### Example 2

A mixture of chromic acid and fluozirconic acid was provided by dissolving chromium trioxide (reagent grade) in aqueous fluozirconic acid, and hydrogen peroxide was then added while mixing at a high rate to reduce the hexavalent chromium to chromium III. Completion of the reduction was signaled by the change in color from yellow-green to blue-green, and confirmation of the conversion was by s-diphenylcarbazide.

Specific Quantities:
chromium trioxide (CrO₃) - 93.8 g
fluozirconic acid (45%, aqueous) - 648.1 g
hydrogen peroxide (35%, aqueous) - 258.1 g + 23.5 g extra

### Example 3

BULK RINSE® 6A, a partially reduced chromic acid, was added to fluozirconic acid, and sufficient hydrogen peroxide was then added to complete the reduction of chromium VI to chromium III. The color once again indicated completion of the reduction, which was again confirmed by s-diphenylcarbazide addition.

### Example 4

A large-scale preparation of Cr₂(ZrF₆)₃ was prepared in a manner analogous to Example 2 above, using the following amounts of ingredients.
chromic acid liquid (40%) - 25.7 kg (56.7 lbs) fluozirconic acid - 70.9 kg (156.3 lbs) hydrogen peroxide - 28.2 kg (62.2 lbs)

Reduction of chromium VI to chromium III was complete well before all of the hydrogen peroxide was added, but the rest of the hydrogen peroxide was still added. Apparently, this run did not require as great an excess of hydrogen peroxide as for the smaller scale preparations, although the reason for this is not completely clear.

### Metal Treatment with High-Purity Chromium III Fluozirconate

The effectiveness of high-purity chromium III fluozirconate for passivating aluminum 2024 and 6061 panels was investigated according to U.S. Military specification MIL-DTL-81706B, dated 25 October 2004. In particular, see reference to Type 2 non-chromate products. The treatment protocol was as shown below, and is similar to that disclosed in WO 2009/137358 A.
1) Clean - BULK KLEEN® 737G, 15 g/L , 60 °C(140°F), 5 minutes
2) Rinse - Tap water, ambient temperature, 30 seconds
3) Deionized water rinse, ambient temperature
4) Chromium III treatment: panels immersed at 37.78 °C (100°F), 5 minutes (See below for details of treatments)
5) Rinse with deionized water: ambient temperature, 30 seconds (for seal application the two steps below are included)
6) Seal; E-CLPS® 1900 chrome-free pretreatment, 2% v/v dilution, ambient temperature, 30 seconds
7) Dry: 54.44 °C (130°F) oven, 5 minutes

A chromium III composition was prepared, including the following components:

| Constituent | Wt. % |
|---|---|
| 45% Fluozirconic Acid | 4.27 |
| Chromium (III) Fluoride Tetrahydrate | 1.05 |
| Ammonium Bifluoride | 0.0125 |
| Aminopropyl Triethoxysilane | 4.78 |
| Water | balance |

This composition, which had a Zr:Cr weight ratio of 2.80:1, was diluted with water to 4% of its original strength before being used to treat aluminum panels, as a control.

High-purity chromium III fluozirconate was prepared according to the method of Example 2, and supplied as a 37.9 % stock solution. The solution was determined to have the following composition by weight, based on stoichiometric calculations using Cr₂(ZrF₆)₃ as the compound formula: 5.47 % Cr, 14.42% Zr, 8.0% F and Zr:Cr = 2.6:1 by weight. This stock solution was used in the following examples, diluted as indicated. In each case, treated panels were exposed to Neutral Salt Spray (NSS) for 336 hours according to ASTM B117, then rinsed and evaluated for pitting.

### Example 5

A 0.121% dilution of the high-purity chromium III fluozirconate stock solution in deionized water was prepared, yielding the same level of Cr as in the control. This solution was adjusted to pH = 4 using ammonium carbonate. Aluminum 6061 and 2024 panels were prepared using the treatment protocol shown above, with and without the E-CLPS® 1900 chrome-free pretreatment seal step. Following NSS, no pitting was observed for the panels treated with high-purity chromium fluozirconate or the control panels. Thus, the high purity chromium III fluozirconate solution produced good results while avoiding the presence of extraneous fluoride ion, such as was present in the control formulation.

### Example 6

a) A 2.21 g/L bath of the high-purity chromium III fluozirconate stock solution was prepared and 1.90 g/L of SILWET® A1100 aminopropyl triethoxysilane was added to yield a similar amount of silane as in the control formulation. When heated to 37.78 °C (100° F), this solution was hazy. Fluozirconic acid (1.5 g/L) was added to this bath to reach a pH of 4.0. While not as hazy, some floc was noted. The Zr to Cr ratio for this solution was 3.86:1. Aluminum 6061 and 2024 panels were prepared using the treatment protocol shown above, with and without the E-CLPS® 1900 chrome-free pretreatment seal step. Following NSS, no pitting was observed for the panels treated with high-purity chromium fluozirconate or the control panels.
b) Another bath was prepared using 2.21g/L of the high-purity chromium III fluozirconate stock solution and 0.22 g/l of H₂ZrF₆ heated to 37.78 °C (100°F), and pH adjusted to 4.0 with ammonium carbonate. The bath was noted to be hazy. The Zr to Cr ratio for this bath was 3.0:1. Aluminum 6061 and 2024 panels were prepared using the treatment protocol shown above, with and without the E-CLPS® 1900 chrome-free pretreatment seal step. Following NSS, no pitting was observed for the panels treated with high-purity chromium fluozirconate or the control panels.
c) Still another bath was prepared using a 2.21g/L of the high-purity chromium III fluozirconate stock solution, and SILWET® A1100 1.0 g/L was added, resulting in a pH of 4.0 at 100° F. Aluminum 6061 and 2024 panels were prepared using the treatment protocol shown above, with and without the E-CLPS® 1900 chrome-free pretreatment seal step. Following NSS, no pitting was observed for the panels treated with high-purity chromium fluozirconate or the control panels.

### Example 7

A bath composed 0.22 g/L of the high-purity chromium III fluozirconate stock solution in water was adjusted with SILWET® A-1100 (1.0 g/L) to bring the pH up to 4.0. The resulting Zr:Cr ratio was 2.6:1 by weight. Aluminum 6061 and 2024 panels were prepared using the treatment protocol shown above, with and without the E-CLPS® 1900 chrome-free pretreatment seal step. Following NSS, no pitting was observed for the panels treated with high-purity chromium fluozirconate or the control panels.

A final modification was made by adding 0.22 g/L of H₂ZrF₆ to the above bath to give a Zr to Cr ratio of 3.0:1. SILWET® A1100 (0.7 g/L) was further added to bring the pH of the bath to 4.0. Aluminum 6061 and 2024 panels were prepared using the treatment protocol shown above, with and without the E-CLPS® 1900 chrome-free pretreatment seal step. Following NSS, no pitting was observed for the panels treated with high-purity chromium fluozirconate or the control panels.

As the foregoing examples show, high-purity chromium III fluozirconate was effective as a standalone passivant for aluminum at a pH of 4.0 and at the concentrations tested, with or without subsequent sealing with E-CLPS® 1900 chrome-free pretreatment. The skilled person will appreciate that, depending on the type of metal being treated, optimization of pH, temperature, exposure time, Zr:Cr ratio, and/or chromium III concentration may be adjusted to provide the best performance.

### Preparation and Use of Pretreatment Compositions

### Example 8

Compositions according to the invention were prepared at two levels of concentration, as shown in Table 1.

**Table 1: Pretreatment Compositions**

| | **Concentrate** | **Working Bath** (Composition 1) |
|---|---|---|
| Cr₂(ZrF₆)₃ | 6.0% | 0.063% |
| CELVOL® 08-125 | 9.0% | 0.093% |
| GANTREZ® S97-BF | 11.3% | 0.117% |
| DIW | Balance | Balance |
| pH | 1.5 | 2.8-3.0 |

The composition at the Working Bath concentration was compared against chrome phosphate (BULK BOND® 1407/1047) and a non-chrome formulation (E-CLPS® 2101). All compositions were applied to 7.62 cm x 30.48 cm x 0.23 cm (3" x 12" x 0.090") 6063 aluminum alloy panels (referred to as "extrusion panels") by spraying, using the sequence of steps described in Table 2.

**Table 2: Spray Application Processes for Various Pretreatments**

| **Process** | **Stage 1** | **Stage 2** | **Stage 3** | **Stage 4** | **Stage 5** |
|---|---|---|---|---|---|
| 1 | BULK KLEEN® 749 | Rinse | BULK KLEEN® 678 | Rinse | E-CLPS® 2101 |
| 2 | BULK KLEEN® 749 | Rinse | BULK KLEEN® 678 | Rinse | Composition 1 |
| 3 | BULK KLEEN® 749 | Rinse | Chrome Phosphate | Rinse | Rinse |

### Process details:

- Stage 1 BULK KLEEN® 749: 1% v/v, 57.22 °C (135°F), 1 minute
- Stage 2 Rinse: tap water, ambient, 30 seconds
- Stage 3 BULK KLEEN® 678: 0.25% v/v, ambient, 30 seconds
- Stage 3 Chrome Phosphate: 0.75% v/v BULK BOND® 1047 + 4.40% BULK BOND® 1407, 37.78 - 48.89 °C (100 - 120°F), 30 seconds
- Stage 4 Rinse: DIW, ambient, 30 seconds
- Stage 5 E-CLPS® 2101: 1% v/v, ambient, 60 seconds, followed by drying in a 148.89 °C (300°F) oven for 3 - 4 minutes
- Stage 5 Composition 1: ambient, 60 seconds, followed by drying in a 148.89 °C (300°F) oven for 3 - 4 minutes
- Stage 5 Rinse (Process 3): DIW, ambient, 30 seconds, followed by drying in a 148.89 °C (300°F) oven for 3 - 4 minutes

The above treatments produced the following coating weights on the pretreated panels:
- E-CLPS® 2101: 58.13 mg/m² (5.4 mg/ft²)
- Composition 1: Cr = 3.01 mg/m² (0.28 mg/ft²), Zr = 1.08 mg/m² (0.1 mg/ft²), Total = mg/m² 59.20 (5.5 mg/ft²) (based on weigh-strip-weigh)
- Chrome Phosphate: 815.90 mg/m² (75.8 mg/ft²)

The pretreated panels were then painted with one of two AAMA 2605-compliant paints: TRINAR® liquid primer/topcoat system from Akzo Nobel, film thickness = 25.4 - 38.1 µm (1.00 - 1.50 mil), pencil hardness = H; and 8X202Q powder system from Akzo Nobel, film thickness = 50.8 - 99.06 µm (2.00 - 3.90 mil), pencil hardness = H. Panels were evaluated with respect to the performance properties shown in Tables 3 and 4, all according to AAMA 2605 except where indicated.

**Table 3: Performance of Pretreatments with AAMA 2605 Powder Paint**

| **Test** | **E-CLPS® 2101** | **Composition 1** | **Chrome Phosphate** |
|---|---|---|---|
| Dry Adhesion | Pass | Pass | Pass |
| Wet Adhesion | Pass | Pass | Pass |
| Boiling Water Adhesion | Pass | Pass | Pass |
| Detergent Resistance | Pass | Pass | Pass |
| Muriatic Acid Resistance | Pass | Pass | Pass |
| Window Cleaner Resistance | Pass | Pass | Pass |
| Impact Resistance | Pass | Pass | Pass |
| ¹Acetic Acid Salt Spray 1000 hours | Pass | Pass | Fail |
| ²Neutral Salt Spray 4000 hours | Scribe = 10 | Scribe = 10 | Scribe = 10 |
| | Field = 10 | Field = 10 | Field = 10 |
| Humidity, 4000 hours | 10 | 10 | 10 |

| | | | |
|---|---|---|---|
| ¹per Qualicoat specifications, 9th edition, effective January, 2000 ²Salt spray conditions per ASTM B117, panel evaluation per ASTM-D1654 | | | |

The Qualicoat specification for 1000 hour acetic acid salt spray requires infiltration from the scribe not to exceed 16 mm² over a scribe length of 10 cm and the length of any single infiltration not to exceed 4 mm. A scribe of 10 indicates mean creepage of 0mm from the scribe. A value of 10 in the "field" (unscribed area) indicates 0 area % of blistering or paint loss in the field. Humidity panels are unscribed, and the entire panel is considered to be the field.

**Table 4: Performance of Pretreatments with AAMA 2605 Liquid Paint**

| **Test** | **E-CLPS® 2101** | **Composition 1** | **Chrome Phosphate** |
|---|---|---|---|
| Dry Adhesion | Pass | Pass | Pass |
| Wet Adhesion | Pass | Pass | Pass |
| Boiling Water Adhesion | Pass | Pass | Pass |
| Detergent Resistance | Pass | Pass | Pass |
| Muriatic Acid Resistance | Pass | Pass | Pass |
| Window Cleaner Resistance | Pass | Pass | Pass |
| Impact Resistance | Pass | Pass | Pass |
| ¹Acetic Acid Salt Spray 1000 hours | Pass | Pass | Pass |
| ²Neutral Salt Spray 4000 hours | Scribe = 10 | Scribe = 10 | Scribe = 10 |
| | Field = 10 | Field = 10 | Field = 10 |
| Humidity, 4000 hours | 10 | 10 | 10 |

| | | | |
|---|---|---|---|
| ¹per Qualicoat specifications, 9th edition, effective January, 2000 ²Salt spray conditions per ASTM B117, panel evaluation per ASTM-D1654 | | | |

Inspection of the panels revealed that chrome phosphate with powder paint clearly failed, with a total infiltration area of > 16 mm². Panels treated with E-CLPS® 2101 with powder paint had minor infiltrations, but still passed the Qualicoat specification. Composition 1 with powder paint had virtually no infiltrations. All three pretreatment compositions with liquid paint passed the Qualicoat specification with virtually no infiltrations.

Unpainted panels were also evaluated after a 336-hour Neutral Salt Spray treatment per ASTM B 117, using an untreated panel as control. The panels were evaluated qualitatively by visual inspection based on uniformity of appearance and amount of corrosion, and were ranked as follows (best to worst): Composition 1 ≈ Chrome Phosphate > E-CLPS® 2101 > No Pretreatment (corrosion present).

### Example 9

A fresh sample of working bath was prepared from concentrate as described in Example 8, and had a pH of 2.8. A portion of the fresh working bath was treated to simulate an aged working bath, i.e., one that had been in use for a period of time to coat panels. The simulated aged working bath was prepared by dissolving a sufficient quantity of aluminum flake in the fresh working bath to yield 40 ppm of dissolved aluminum, and then the pH was restored to 2.8 by adding concentrate prior to application. The concentrations of metals in the baths were as shown in Table 5.

**Table 5: Bath Composition**

| **Constituent** | **Fresh Bath** | **Aged Bath** |
|---|---|---|
| Cr (ppm) | 90 | 166 |
| Zr (ppm) | 240 | 481 |
| F (ppm) | 300 | 591 |
| Al (ppm) | 0 | 40 |

The fresh and simulated aged bath compositions were applied to extrusion panels by an immersion process, using the following sequence of steps: BULK KLEEN® 749 (1% v/v, 57.22 °C (135°F), 2 minutes); rinse (ambient, 1 minute); BULK KLEEN® 678 (0.05% v/v, ambient, 1 minute); rinse (DIW, ambient, 1 minute); pretreatment with the bath composition (ambient, pH = 2.8 - 3.0, 2 minutes); dry (65.56 °C (150°F) oven, 5 minutes). Metal coating weights of the resulting pretreated panels were as shown in Table 6.

**Table 6: Pretreatment Coating Weights**

| | **Cr** mg/m²/**(mg/ft²)** | **Zr** mg/m²/**(mg/ft²)** | **Total** mg/m²/**(mg/ft²)** based on Weigh-Strip-Weigh |
|---|---|---|---|
| **Fresh Bath** | 4.74/(0.44) | 3.23/(0.3) | 93.65/(8.7) |
| **Aged Bath** | 8.40/(0.78) | 5.38/(0.5) | 168.99/(15.7) |

The pretreated panels were then painted with one of two paints: TRINAR® liquid primer/topcoat system (AAMA 2605-compliant) from Akzo Nobel, and Valspar A201 Alenco Poly 3500 liquid paint (AAMA 2603-compliant). Panels were evaluated with respect to the performance properties shown in Tables 7 and 8, all according to AAMA 2603 and 2605 respectively, except where indicated.

**Table 7: Fresh & Aged Pretreatments, AAMA 2603 Liquid Paint**

| **Test** | **²Fresh Pretreatment** | **³Aged Pretreatment** |
|---|---|---|
| Dry Adhesion | Pass | Pass |
| Wet Adhesion | Pass | Pass |
| Boiling Water Adhesion | Pass | Pass |
| Detergent Resistance | Pass | Pass |
| Impact Resistance | Pass | Pass |
| ¹Neutral Salt Spray 1500 hours | Scribe =10, Field = 10 | Scribe =10, Field = 10 |
| Humidity 1500 hours | 10 | 10 |

| | | |
|---|---|---|
| ¹Salt spray conditions per ASTM B117, panel evaluation per ASTM-D1654 ²film thickness = 21.59 - 53.34 µm (0.85 - 2.10 mil), pencil hardness = 2H ³film thickness = 25.4 - 44.45 µm (1.00-1.75 mil), pencil hardness = 2H | | |

The 1500 hour neutral salt spray and humidity panels rated 10 according to ASTM D-1654 as described above, i.e., zero creepage from scribe and zero blistering or paint loss in the field.

**Table 8: Fresh & Aged Pretreatment, AAMA 2605 Liquid Paint**

| **Test** | **³Fresh Pretreatment** | **⁴Aged Pretreatment** |
|---|---|---|
| Dry Adhesion | Pass | Pass |
| Wet Adhesion | Pass | Pass |
| Boiling Water Adhesion | Pass | Pass |
| Detergent Resistance | Pass | Pass |
| Impact Resistance | Pass | Pass |
| ¹Acetic Acid Salt Spray 1000 hours | Pass | Pass |
| ²Neutral Salt Spray 4000 hours | Scribe = 10 | Scribe = 10 |
| | Field = 10 | Field = 10 |
| Humidity 4000 hours | 10 | 10 |

| | | |
|---|---|---|
| ¹per Qualicoat specifications, 9th edition, effective January, 2000 ²Salt spray conditions per ASTM B117, panel evaluation per ASTM-D1654 ³film thickness = 25.4 - 36,83 µm (1.00 - 1.45 mil), pencil hardness = 2H ⁴film thickness = 25.4 - 36.83 µm (1.00 - 1.45 mil), pencil hardness = 2H | | |

The 1000 hour acetic acid salt spray panels passed the Qualicoat specification with no infiltrations.

### Example 10

A second composition according to the invention was prepared as both a concentrate and at working bath strength, as shown in Table 9.

**Table 9: Pretreatment Compositions**

| | **Concentrate** | **Working Bath** (Composition 2) |
|---|---|---|
| Cr₂(ZrF₆)₃ | 4.3% | 0.045% |
| CELVOL® 08-125 | 9.0% | 0.093% |
| GANTREZ® S97-BF | 11.3% | 0.117% |
| DIW | Balance | Balance |
| pH | 1.6 | 2.8-3.2 |

Fresh Composition 2 was evaluated along with an aged version, prepared as follows. A sufficient number of extrusion panels was processed through Composition 2 to give a total throughput of 9.29 m² (100 ft²) of panel surface area per gallon of bath volume. During the aging process, the pH of the bath was monitored and replenished with the concentrate at regular intervals. When 2.04 m²/l (100 ft²/gallon) of throughput had been reached, a set of extrusion panels was pretreated for subsequent painting and testing. The metal contents of the fresh and aged compositions are shown in Table 10.

**Table 10: Bath Composition**

| **Constituent** | **Fresh Bath** | **After Aging** |
|---|---|---|
| Cr (ppm) | 65 | 247 |
| Zr (ppm) | 173 | 512 |
| F (ppm) | 216 | 1186 |
| Al (ppm) | 0 | 92 |

The fresh and aged compositions were applied to 7.62 cm x 30.48 cm x 0.23 cm (3" x 12" x 0.090") extrusion panels by an immersion process as follows: BULK KLEEN® 749 (1% v/v, 57. 22 °C (135°F), 2 minutes), rinse (ambient, 1 minute), BULK KLEEN® 678 (0.05% v/v, ambient, 1 minute), rinse (DI water, ambient, 1 minute), pretreatment (pH = 2.8 - 3.2, ambient, 2 minutes), dry (150° oven, 5 minutes). The resulting pretreated panels had metal coating weights as shown in Table 11.

**Table 11: Pretreatment Coasting Weights**

| | **Cr** mg/m²/**(mg/ft²)** | **Zr** mg/m²/**(mg/ft²)** | **Total** mg/m²/**(mg/ft²)** (Based on Weigh-Strip-Weigh) |
|---|---|---|---|
| **Fresh Bath** | 9.04/(0.84) | 6.46/(0.6) | 180.83/(16.8) |
| **Aged Bath** | 18.51/(1.72) | 11.84/(1.1) | 371.35/(34.5) |

The pretreated panels were then painted with one of two paints: TRINAR® liquid primer/topcoat system (AAMA 2605-compliant) from Akzo Nobel, and Valspar A201 Alenco Poly 3500 liquid paint (AAMA 2603-compliant). Panels were evaluated with respect to the performance properties shown in Tables 12 and 13, all according to AAMA 2603 and 2605 respectively, except where indicated.

**Table 12: Fresh & Aged Pretreatment, AAMA 2603 Liquid Paint**

| **Test** | **²Fresh Bath** | **³Aged Bath** |
|---|---|---|
| Dry Adhesion | Pass | Pass |
| Wet Adhesion | Pass | Pass |
| Boiling Water Adhesion | Pass | Pass |
| Detergent Resistance | Pass | Pass |
| Impact Resistance | Pass | Pass |
| ¹Neutral Salt Spray 1500 hours | Scribe = 10 | Scribe = 10 |
| | Field = 10 | Field = 10 |
| Humidity 1500 hours | 10 | 10 |

| | | |
|---|---|---|
| ¹Salt spray conditions per ASTM B117, panel evaluation per ASTM-D1654 ²film thickness = 25.4 - 38.1 µm (1.00 - 1.50 mil), pencil hardness = 2H ³film thickness = 35.56 µm (1.40 mil), pencil hardness = 2H | | |

The 1500 hour neutral salt spray and humidity panels rated 10 per ASTM D-1654 as described above, i.e., zero creepage from scribe and zero blistering or paint loss.

**Table 13: Fresh & Aged Pretreatment, AAMA 2605 Liquid Paint**

| **Test** | **³Fresh Bath** | **⁴Aged Bath** |
|---|---|---|
| Dry Adhesion | Pass | Pass |
| Wet Adhesion | Pass | Pass |
| Boiling Water Adhesion | Pass | Pass |
| Detergent Resistance | Pass | Pass |
| Impact Resistance | Pass | Pass |
| ¹Acetic Acid Salt Spray 1000 hours | Pass | Pass |
| ²Neutral Salt Spray 4000 hours | Pending | Pending |
| Humidity 4000 hours | Pending | Pending |

| | | |
|---|---|---|
| ¹per Qualicoat specifications, 9th edition, effective January, 2000 ²Salt spray conditions per ASTM B117, panel evaluation per ASTM-D1654 ³film thickness = 25.4- 60.96 µm (1.00 - 2.40 mil), pencil hardness = 2H ⁴film thickness = 39.37 µm (1.55 mil), pencil hardness = 2H | | |

The 1000 hour acetic acid salt spray panels passed the Qualicoat specification with no infiltrations.

Although the invention is illustrated and described herein with reference to specific embodiments, the invention is not intended to be limited to the details shown. Rather, various modifications may be made in the details within the scope and range of the claims and without departing from the invention.

## Claims

1. A method of preparing an aqueous solution of Cr₂(GF₆)₃, in which G is a Group IV-B element, comprising adding hydrogen peroxide to a mixture comprising water and a chromium VI compound in the presence of at least one acid according to the formula H₂GF₆, in which G is a Group IV-B element, wherein the aqueous composition contains less than 500 ppm of alkali metal ions and less than 200 ppm of halide ions, relative to chromium, and one or more contaminating ions, wherein the total amount of said one or more contaminating ions is present at less than 1000 ppm relative to chromium, wherein said one or more contaminating ions are ions that are not ions of a salt with the canonical formula of Cr₂(GF₆)₃ and wherein the aqueous composition tests negative for chromium VI using s-diphenylcarbazide.

2. The method of claim 1, wherein the chromium VI compound comprises chromic acid.

3. The method of any of claim 1 or claim 2, wherein G is zirconium.

4. The method of claim 3, wherein the aqueous composition has a weight ratio of Zr:Cr in a range from 2.4: 1 to 3.0: 1.

5. The method of any of claims 1 to 4, wherein the mixture comprises partially reduced chromic acid.

6. The method of any of claims 1 to 5, wherein the at least one acid is present in the mixture before the step of adding the hydrogen peroxide.

7. The method of any of claims 1 to 6, wherein the aqueous composition is essentially free of suspended or precipitated solids.

8. An aqueous composition comprising dissolved Cr₂(GF₆)₃, in which G is a Group IV-B element, and containing less than 500 ppm of alkali metal ions and less than 200 ppm of halide ions, relative to chromium and which tests negative for chromium VI using s-diphenylcarbazide, wherein the composition contains one or more contaminating ions, and wherein the total amount of said one or more contaminating ions is present at less than 1000 ppm relative to chromium, wherein said one or more contaminating ions are ions that are not ions of a salt with the canonical formula of Cr₂(GF₆)₃.

9. The composition of claim 8, wherein G is zirconium.

10. The composition of claim 9, wherein the aqueous composition has a weight ratio of Zr:Cr in a range from 2.4: 1 to 3.0 : 1.

11. The composition of claim 8, wherein G is titanium.

12. A method of treating a metal surface, comprising contacting the metal surface with an aqueous composition comprising dissolved Cr₂(GF₆)₃, in which G is a Group IV-B element, and containing less than 500 ppm in total of alkali metal ions and less than 200 ppm of halide ions, relative to chromium,_and which tests negative for chromium VI using s-diphenylcarbazide, wherein the aqueous composition contains one or more contaminating ions, and wherein the total amount of said one or more contaminating ions is present at less than 1000 ppm relative to chromium, and wherein said one or more contaminating ions are ions that are not ions of a salt with the canonical formula of Cr₂(GF₆)₃.

13. The method of claim 12, wherein G is zirconium.

14. The method of claim 13, wherein the aqueous composition has a weight ratio of Zr:Cr in a range from 2.4: 1 to 3.0: 1.

15. The method of claim 14, wherein G is titanium.

16. The method of any of claims 12 to 15, wherein the metal surface is Al, Zn or an alloy of either of these.

17. The method of any of claims 12 to 16, further comprising drying the composition in place on the metal surface without an intervening rinse step.

## Patentansprüche

1. Verfahren zur Herstellung einer wässrigen Lösung von Cr₂(GF₆)₃, wobei G für ein Element der Gruppe IV-B steht, umfassend das Zugeben von Wasserstoffperoxid zu einer Mischung, die Wasser und eine Chrom-VI-Verbindung umfasst, in Gegenwart mindestens einer Säure gemäß der Formel H₂GF₆, wobei G für ein Element der Gruppe IV-B steht, wobei die wässrige Zusammensetzung weniger als 500 ppm Alkalimetallionen und weniger als 200 ppm Halogenidionen, bezogen auf Chrom, und ein oder mehrere kontaminierende Ionen enthält, wobei die Gesamtmenge des kontaminierenden Ions bzw. der kontaminierenden Ionen weniger als 1000 ppm, bezogen auf Chrom, beträgt, wobei es sich bei dem kontaminierenden Ion bzw. den kontaminierenden Ionen um Ionen handelt, die nicht Ionen eines Salzes mit der kanonischen Formel Cr₂(GF₆)₃ sind und wobei ein Test der wässrigen Zusammensetzung auf Chrom VI mit s-Diphenylcarbazid negativ ausfällt.

2. Verfahren nach Anspruch 1, bei dem die Chrom-VI-Verbindung Chromsäure umfasst.

3. Verfahren nach Anspruch 1 oder Anspruch 2, bei dem G für Zirconium steht.

4. Verfahren nach Anspruch 3, bei dem die wässrige Zusammensetzung ein Gewichtsverhältnis von Zr:Cr in einem Bereich von 2,4:1 bis 3,0:1 aufweist.

5. Verfahren nach einem der Ansprüche 1 bis 4, bei dem die Mischung teilweise reduzierte Chromsäure umfasst.

6. Verfahren nach einem der Ansprüche 1 bis 5, bei dem die mindestens eine Säure vor dem Schritt des Zugebens des Wasserstoffperoxids in der Mischung vorliegt.

7. Verfahren nach einem der Ansprüche 1 bis 6, bei dem die wässrige Zusammensetzung im Wesentlichen frei von suspendierten oder ausgefallenen Feststoffen ist.

8. Wässrige Zusammensetzung, die gelöstes Cr₂(GF₆)₃, wobei G für ein Element der Gruppe IV-B steht, umfasst und weniger als 500 ppm Alkalimetallionen und weniger als 200 ppm Halogenidionen, bezogen auf Chrom, enthält und bei der ein Test auf Chrom VI mit s-Diphenylcarbazid negativ ausfällt, wobei die Zusammensetzung ein oder mehrere kontaminierende Ionen umfasst und wobei die Gesamtmenge des kontaminierenden Ions bzw. der kontaminierenden Ionen weniger als 1000 ppm, bezogen auf Chrom, beträgt, wobei es sich bei dem kontaminierenden Ion bzw. den kontaminierenden Ionen um Ionen handelt, die nicht Ionen eines Salzes mit der kanonischen Formel Cr₂(GF₆)₃ sind.

9. Zusammensetzung nach Anspruch 8, wobei G für Zirconium steht.

10. Zusammensetzung nach Anspruch 9, wobei die wässrige Zusammensetzung ein Gewichtsverhältnis von Zr:Cr in einem Bereich von 2,4:1 bis 3,0:1 aufweist.

11. Zusammensetzung nach Anspruch 8, wobei G für Titan steht.

12. Verfahren zum Behandeln einer Metalloberfläche, umfassend das Behandeln der Metalloberfläche mit einer wässrigen Zusammensetzung, die gelöstes Cr₂(GF₆)₃, wobei G für ein Element der Gruppe IV-B steht, umfasst und weniger als 500 ppm Alkalimetallionen und weniger als 200 ppm Halogenidionen, bezogen auf Chrom, enthält und bei der ein Test auf Chrom VI mit s-Diphenylcarbazid negativ ausfällt, wobei die wässrige Zusammensetzung ein oder mehrere kontaminierende Ionen umfasst und wobei die Gesamtmenge des kontaminierenden Ions bzw. der kontaminierenden Ionen weniger als 1000 ppm, bezogen auf Chrom, beträgt, und wobei es sich bei dem kontaminierenden Ion bzw. den kontaminierenden Ionen um Ionen handelt, die nicht Ionen eines Salzes mit der kanonischen Formel Cr₂(GF₆)₃ sind.

13. Verfahren nach Anspruch 12, bei dem G für Zirconium steht.

14. Verfahren nach Anspruch 13, bei dem die wässrige Zusammensetzung ein Gewichtsverhältnis von Zr:Cr in einem Bereich von 2,4:1 bis 3,0:1 aufweist.

15. Verfahren nach Anspruch 14, bei dem G für Titan steht.

16. Verfahren nach einem der Ansprüche 12 bis 15, bei dem es sich bei der Metalloberfläche um Al, Zn oder eine Legierung von einem der beiden handelt.

17. Verfahren nach einem der Ansprüche 12 bis 16, ferner umfassend das Trocknen der Zusammensetzung an Ort und Stelle auf der Metalloberfläche ohne zwischengeschalteten Spülschritt.

## Revendications

1. Méthode de préparation d'une solution aqueuse de Cr₂(GF₆)₃, où G est un élément du Groupe IV-B, comprenant l'addition de peroxyde d'hydrogène à un mélange comprenant de l'eau et un composé de chrome VI en présence d'au moins un acide répondant à la formule H₂GF₆, où G est un élément du Groupe IV-B, où la composition aqueuse contient moins de 500 ppm d'ions de métaux alcalins et moins de 200 ppm d'ions halogénure, par rapport au chrome, et un ou plusieurs ions contaminants, où la quantité totale desdits un ou plusieurs ions contaminants est présente à moins de 1000 ppm par rapport au chrome, où lesdits un ou plusieurs ions contaminants sont des ions qui ne sont pas des ions d'un sel répondant à la formule canonique de Cr₂(GF₆)₃ et où la composition aqueuse présente un résultat négatif pour le chrome VI en utilisant du s-diphénylcarbazide.

2. Méthode selon la revendication 1, dans laquelle le composé de chrome VI comprend de l'acide chromique.

3. Méthode selon l'une quelconque parmi la revendication 1 ou la revendication 2, dans laquelle G est du zirconium.

4. Méthode selon la revendication 3, dans laquelle la composition aqueuse possède un rapport pondéral Zr:Cr dans une plage allant de 2,4:1 à 3,0:1.

5. Méthode selon l'une quelconque des revendications 1 à 4, dans laquelle le mélange comprend de l'acide chromique partiellement réduit.

6. Méthode selon l'une quelconque des revendications 1 à 5, dans laquelle le au moins un acide est présent dans le mélange avant l'étape d'addition du peroxyde d'hydrogène.

7. Méthode selon l'une quelconque des revendications 1 à 6, dans laquelle la composition aqueuse est essentiellement dépourvue de matières solides en suspension ou précipitées.

8. Composition aqueuse comprenant du Cr₂(GF₆)₃ dissous, où G est un élément du Groupe IV-B, et contenant moins de 500 ppm d'ions de métaux alcalins et moins de 200 ppm d'ions halogénure, par rapport au chrome, et qui présente un résultat négatif pour le chrome VI en utilisant du s-diphénylcarbazide, où la composition contient un ou plusieurs ions contaminants, et où la quantité totale desdits un ou plusieurs ions contaminants est présente à moins de 1000 ppm par rapport au chrome, où lesdits un ou plusieurs ions contaminants sont des ions qui ne sont pas des ions d'un sel répondant à la formule canonique de Cr₂(GF₆)₃.

9. Composition selon la revendication 8, dans laquelle G est du zirconium.

10. Composition selon la revendication 9, dans laquelle la composition aqueuse possède un rapport pondéral Zr:Cr dans une plage allant de 2,4:1 à 3,0:1.

11. Composition selon la revendication 8, dans laquelle G est du titane.

12. Méthode de traitement d'une surface métallique, comprenant la mise en contact de la surface métallique avec une composition aqueuse comprenant du Cr₂(GF₆)₃ dissous, où G est un élément du Groupe IV-B, et contenant moins de 500 ppm au total d'ions de métaux alcalins et moins de 200 ppm d'ions halogénure, par rapport au chrome, et qui présente un résultat négatif pour le chrome VI en utilisant du s-diphénylcarbazide, où la composition aqueuse contient un ou plusieurs ions contaminants, et où la quantité totale desdits un ou plusieurs ions contaminants est présente à moins de 1000 ppm par rapport au chrome, et où lesdits un ou plusieurs ions contaminants sont des ions qui ne sont pas des ions d'un sel répondant à la formule canonique de Cr₂(GF₆)₃.

13. Méthode selon la revendication 12, dans laquelle G est du zirconium.

14. Méthode selon la revendication 13, dans laquelle la composition aqueuse possède un rapport pondéral Zr:Cr dans une plage allant de 2,4:1 à 3,0:1.

15. Méthode selon la revendication 14, dans laquelle G est du titane.

16. Méthode selon l'une quelconque des revendications 12 à 15, dans laquelle la surface métallique est Al, Zn ou un alliage de l'un ou l'autre parmi ceux-ci.

17. Méthode selon l'une quelconque des revendications 12 à 16, comprenant en outre le séchage de la composition en place sur la surface métallique sans étape de rinçage intermédiaire.
